# EUROPEAN PATENT APPLICATION

(11) **EP 4 579 003 A1**
(43) Date of publication of application: **02.07.2025**
(21) Application number: 24180200.8
(22) Date of filing: 05.06.2024
(51) Int. Cl.: C25D 13/22, G05B 13/02, F26B 25/22, F26B 23/02

(54) **ENERGY EFFICIENT ELECTRO-DEPOSITION COATING SYSTEM WITH OPTIMIZED OVEN CONSUMPTION**

(30) Priority: 29.12.2023 IN 202341089975
(71) Applicant: Bert Labs Private Limited, Bengaluru 560076 (IN)
(72) Inventor: KOCHAR, ROHIT, 560076 Bengaluru (IN)
(74) Representative: Botti & Ferrari S.p.A.

(57) **Abstract**

A system (100) for optimizing fuel and energy consumption by an Electro-Deposition (ED) oven (114) of an automobile paint shop (108) is disclosed. The system (100) includes a digital twin (112) of the ED oven (114). The digital twin (112) is based on design parameters and operational data. The system (100) further includes an RL agent (202) that is configured to receive training and learn control strategies through interaction with at least environment models (112c) for generating policies. The RL agent (202) is further configured to output at least one policy including an optimal opening percentage of at least one gas damper and an optimal speed of at least one fan, which when implemented leads to savings in the fuel and energy consumption while maintaining at least effective metal temperature (EMT) of the coated automobile component (716) in a recommended range in the ED oven (114).

## Description

### CROSS-REFERENCE TO RELATED APPLICATIONS

The present application claims priority to Indian Patent Application No. 202341089975, filed to the Indian Patent Office on December 29, 2023, and entitled "ENERGY EFFICIENT ELECTRO-DEPOSITION COATING SYSTEM WITH OPTIMIZED OVEN CONSUMPTION", which is incorporated herein by reference in its entirety.

### TECHNICAL FIELD OF THE INVENTION

The present invention pertains to the field of surface treatment and coating technologies, specifically an improved process in Electro-Deposition (ED) coating systems. It focuses on advancements in the operation of ED ovens used for baking and curing coated metal components, with a particular emphasis on optimizing fuel and energy consumption while maintaining or enhancing the quality of the coating.

### BACKGROUND OF THE INVENTION

The surface treatment industry plays a crucial role in various sectors, including automotive, aerospace, and consumer goods. Among the various technologies, Electro-Deposition (ED) coating is prominent for providing chemically resistant, mechanically durable, and aesthetically pleasing finishes to metal components.

In standard ED coating plants, metal components are coated by submerging them in a paint emulsion and applying an electrical current. The coated components are then cured in an ED oven. These ovens are often energy-intensive, contributing significantly to the operational costs and environmental footprint of the coating process.

High energy and fuel consumption in ED ovens are major concerns. This not only increases operational costs but also impacts on the environment due to higher emissions. The efficiency of energy use in these ovens varies significantly, often leading to unnecessary energy expenditure without corresponding benefits in coating quality. Thus, there exists a need for a technical and reliable solution that can overcome the above-mentioned problems, challenges, and short-comings, and provides a new and enhanced technical solution for optimizing fuel and power consumption.

### SUMMARY OF THE INVENTION

In accordance with one aspect of the present disclosure, a system for optimizing fuel and energy consumption by an automobile paint shop Electro-Deposition (ED) oven is disclosed. The system may include a digital twin configured to simulate an ED oven that is used for baking and curing a coated automobile component in an automobile paint shop. The digital twin may be simulated based on collected operational data and design data of the ED oven. The system may further include a reinforcement learning (RL) agent that is configured to receive training using one or more environment models derived from the digital twin of the ED oven. In an embodiment, the RL agent may be further configured to learn one or more control strategies through interaction with at least the one or more environment models for generating one or more policies. Each policy may include at least opening percentage of one or more gas dampers and speed of one or more fans. In an embodiment, the RL agent may be further configured to output at least one policy including at least an optimal opening percentage of at least one gas damper and an optimal speed of at least one fan, based on processing of at least real-time predictions by at least the one or more environment models. In an embodiment, the at least one gas damper may be operated based on the corresponding optimal opening percentage that leads to optimization of fuel flow rate, and the at least one fan may be operated based on the corresponding optimal speed that leads to optimization of energy consumption. Further, in an embodiment, the fuel and energy consumption may be optimized while maintaining at least effective metal temperature (EMT) of the coated automobile component in a recommended range in the ED oven.

In an embodiment, the role of fans is pivotal for maintaining the appropriate environmental conditions within the ED oven. The three types of fans may include the one or more recirculating fans, cooling fans, and hot air fans, each serving a unique and critical function in the coating process. The recirculating fans may be responsible for maintaining a uniform temperature throughout the ED oven. By circulating the air inside the ED oven, they ensure that all parts of the automobile component receive consistent heat exposure. This uniformity is crucial for the even curing of the coating. For example, if a component has uneven heat distribution, it could lead to areas of under-curing or over-curing, affecting the quality of the finish. After the coating is applied and cured, it is essential to bring the temperature of the components down to a safe handling level. This is where cooling fans come into play. They help in gradually lowering the temperature of the coated components, preventing any thermal shocks that might damage the coating. For instance, if a component is cooled too rapidly, it might lead to the development of stresses in the coating, resulting in cracks or peeling. The hot air fans are used to distribute hot air within the ED oven, particularly in the heat-up zones. Their primary role is to raise the temperature of the components rapidly and evenly to the required level for curing the coating. Even distribution of hot air is vital to ensure that all parts of the component reach the curing temperature simultaneously.

In an embodiment, the simulation of the ED oven may include digital simulation of at least one or more gas dampers, gas burners, volatile organic compound (VOC) burners, recirculating fans, cooling fans, hot air fans, and fuel injectors associated with the ED oven. In an embodiment, the operational data may include at least one of an amount of time spent by each jig in each zone including at least one of a pre-heat zone, a heat-up zone, a hold-up zone, and a cooling zone of the ED oven, speed of each jig in each zone of the ED oven, EMT of the automobile component at different jig positions in the ED oven, power consumption, fuel flow rate, fuel consumption, fan speed, supply and return temperature, and initial temperature of the automobile component. In an embodiment, the design data may include at least specifications of one or more equipment associated with the ED oven. The one or more equipment may correspond to at least the one or more gas dampers, gas burners, VOC burners, recirculating fans, cooling fans, hot air fans, and fuel injectors.

In an embodiment, the RL agent may be further configured to optimize the fuel flow rate and fan speed, ensuring one or more constraints are met by setting one or more optimal values for one or more process parameters, thereby enabling savings in at least the energy and fuel consumption. The one or more constraints may include at least: maintaining the EMT at different jig positions as per the automobile components' requirement, maintaining burner outlet temperature of the one or more gas burners in a predefined range, maintaining optimal time spent for each unit process, maintaining energy consumption between minimum and maximum energy consumption levels, and maintaining fuel flow rate between minimum and maximum fuel flow levels.

In an embodiment, the system may further include a preprocessing module that is configured to process at least the operational data for cleaning and structuring at least the operational data. In an embodiment, the system may further include a first principles physics-based model that is simulated based on the processed operational data and the design data and is then validated by: (1) using real-time operational data or (2) performing manual inspection. In an embodiment, the system may further include a reduced order model (ROM) including at least design of experiments (DoE) data and outputs of the DoE data. The ROM may be generated based on the first principles physics-based model and simulation. In an embodiment, the one or more environment models may be generated based on at least the DoE data and the outputs of the DoE data. The one or more environment models may be validated based on real test values and predicted values. Further, in cases where the validation does not meet predefined error thresholds, preprocessing may be performed and then hyperparameter tuning may be employed for retraining the one or more environment models. In an embodiment, the digital twin may include at least one of: (1) the first principles physics-based model based on the operational data and the design data, (2) the ROM including the DoE data and outputs of the DoE data, and (3) the one or more environment models based on the ROM. In an embodiment, the RL agent's training may further involve defining a reward function based on at least one of the fuel flow rate, fan power consumption, fan speed, EMT, burner outlet temperature, and time spent for each unit process. The RL agent may learn by maximizing the received positive rewards for more desired outcomes and by minimizing the received negative rewards for less desired outcomes.

In an embodiment, the RL agent's policies are continuously updated based on interactions with at least the digital twin, the one or more environment models, and real-time operational data associated with the ED oven process. In an embodiment, the RL agent may be further configured to adapt to changing objectives, system and sub-system requirements, and new data post-deployment, and adjust its policies or generates new polices based on a continuous feedback loop from the real-time operational data of the ED oven process. In an embodiment, each policy is validated over the digital twin or the one or more environment models. The validation may include simulating the predicted outcomes over the digital twin or the one or more environment models and checking whether it optimizes the fuel and energy consumption. In an embodiment, the one or more environment models may be further configured to receive and process real-time operational data and generate the real-time predictions with respect to at least the EMT of the automobile component at one or more jig positions in each zone, fan speed, damper position, fan power consumption, fuel flow rate, zone temperature (i.e., air temperature in each zone), return temperature from one or more zones (i.e., temperature at which air is returning from the zones through the recirculating fans), and supply temperature to the one or more zones. Further, the RL agent may be configured to select the at least one policy from the one or more policies or generate the at least one policy as a new policy in real-time based on the real-time predictions by the one or more environment models.

These and other features and advantages of the present disclosure may be appreciated from a review of the following detailed description of the present disclosure, along with the accompanying figures in which like reference numerals refer to like parts throughout.

### BRIEF DESCRIPTION OF THE DRAWINGS

The novel features which are believed to be characteristic of the present invention, as to its structure, organization, use, and method of operation, together with further objectives and advantages thereof, will be better understood from the following drawings through which various preferred embodiments of the present invention will now be illustrated and described by way of example. It is expressly understood, however, that the drawings are for the purpose of illustration and description only and are not intended as a definition of the limits of the present invention. Embodiments of the present invention will now be described by way of example(s) in association with the accompanying drawings in which:
Figure 1a is a diagram that illustrates a system environment in which various embodiments of the present invention are practiced.
Figure 1b is a diagram that illustrates components of an application server of the system environment, in accordance with an embodiment of the present invention.
Figure 1c is a diagram that illustrates models of a digital twin of the system environment, in accordance with an embodiment of the present invention.
Figure 2 is a diagram that illustrates a reinforcement learning (RL) model, in accordance with an embodiment of the present invention.
Figure 3 is a diagram that illustrates an exemplary fuel and energy optimization system of an ED oven by utilizing an RL agent, in accordance with an embodiment of the present invention.
Figure 4 is a diagram that shows a dashboard illustrating online interaction of a simulated ED oven, in accordance with an embodiment of the present invention.
Figure 5 is a diagram that illustrates a flowchart of a method for developing an optimization solution for deployment, in accordance with an embodiment of the present invention.
Figure 6 is a diagram that illustrates a flowchart of a method for optimizing fuel and energy consumption by the ED oven, in accordance with an embodiment of the present invention.
Figure 7 is a diagram that illustrates the ED oven and its equipment and zones, in accordance with an embodiment of the present invention.

### DETAILED DESCRIPTION OF THE INVENTION

The present invention will now be described more fully hereinafter with reference to the accompanying drawings, which form a part hereof, and which show, by way of illustration, specific exemplary embodiments by which the invention may be practiced. This invention may, however, be embodied in many different forms and should not be construed as limited to the embodiments set forth herein; rather, these embodiments are provided so that this disclosure will be thorough and complete, and will fully convey the scope of the present invention to those skilled in the art. Among other things, the present invention may be embodied as methods, systems, or devices, or a combination thereof. Accordingly, the present invention may take the form of an entirely hardware embodiment, an entirely software embodiment, or an embodiment combining software and hardware aspects. The following detailed description is, therefore, not to be taken in a limiting sense.

The present invention discloses a system and method for optimizing fuel and energy consumption by an automobile paint shop Electro-Deposition (ED) oven. An ED coating plant is a surface treatment plant that uses a process called electro-deposition to coat metal components with a chemically resistant, mechanically durable, and aesthetically pleasing paint. The process involves submerging the metal component in a bath of paint emulsion and applying an electrical current to it. This causes the charged particles in the paint to move towards the component under electrical forces, resulting in a uniform coating that reaches every corner of the component. The coated component is then taken to an ED oven at high temperatures to bake and cure the paint and create a hard, durable polymeric film.

The ED oven is divided into one or more zones such as a pre-heat zone, a heat-up zone, a hold-up zone, and a cooling zone. The pre-heat zone (optional) is a section of the ED oven where the coated component is preheated to bring it to a desired or required temperature before passing it to the next zone. The heat-up zone is a section of the ED oven, where the coated component is heated to a temperature of around 180°C. The hold-up zone is a section of the ED oven, where the component is held at a constant temperature of around 180°C for a specific duration to ensure that the paint is cured completely. The cooling zone is the final section of the ED oven, where the component is cooled down to room temperature. The cooling rate is carefully controlled to prevent any thermal shock or deformation of the component. In the ED process, each metal part is hung by using a jig (e.g., a kind of metal hanger or holding apparatus) that is continuously moving on a line (e.g., a moving belt) that passes through the one or more zones of the ED oven. The metal parts may remain in each zone for a predefined time duration. The metal parts are continuously moving on the line, and the speed of the line is adjusted to ensure that the metal parts remain in each zone for the required amount of time. This ensures that the metal parts are coated evenly and that the coating is of high quality.

In the context of the ED oven used in the automobile painting process, the effective metal temperature (EMT) may refer to the temperature of the metal part that is coated with paint and is undergoing baking and curing in the ED oven. The ED oven is the first oven in a paint shop and is also known as the E-Coat Oven. After the Electro-coat is applied by submerging the parts in an E-coat tank, the parts are rinsed and sent through the E-coat bake oven to dry and cure. The E-coat oven is the hottest oven in the paint shop at temperatures of ~350°F. The EMT is important in determining the properties of the metal, such as its strength and ductility. If the EMT is too low, the coating may not adhere properly to the metal surface, leading to poor quality and durability of the coating. On the other hand, if the EMT is too high, the metal may become brittle and prone to cracking, which can also affect the quality and durability of the coating. Therefore, it is important to maintain the EMT within the recommended range to ensure the best possible coating quality and durability. The recommended range of EMT for metal parts undergoing painting via the ED oven is not a fixed value and can vary depending on the specific type of paint and metal being used. However, as a guideline, the EMT may be maintained within the range of 325°F to 375°F.

The present invention discloses fuel and energy optimization systems and methods that aim to optimize fuel and energy consumption while maintaining at least the EMT of the metal part in the recommended range. The fuel and energy optimization systems and methods include a range of components and applications, including a digital twin of the ED oven, a reinforcement learning (RL) agent with various capabilities, and several servers, devices, modules, and models for processing data and executing various operations, features, and functionalities. The disclosed systems and methods address the optimization of fuel and energy consumption, real-time data processing and prediction, and continuous updating and validation of policies for the ED oven operation efficiency. Each disclosed feature builds upon the system's innovative approach to managing and optimizing curing operations using advanced digital simulations and learning techniques.

The present invention will now be described with reference to the accompanying drawings which should be regarded as merely illustrative without restricting the scope and ambit of the present invention.

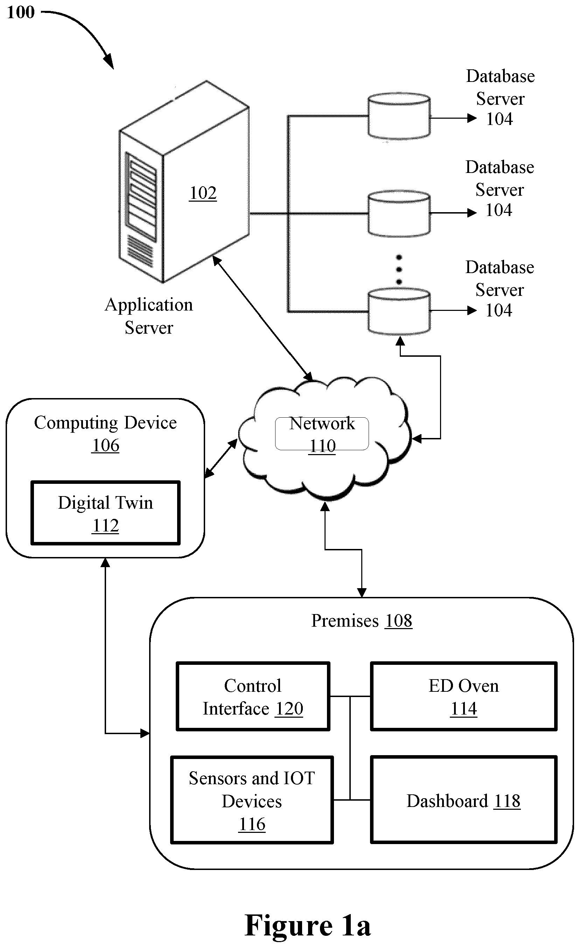

Figure 1a is a diagram that illustrates a system environment 100 in which various embodiments of the present invention are practiced. The system environment 100 may include one or more servers such as an application server 102 and a database server 104. The system environment 100 may further include a computing device 106 and a premises 108. The application server 102, the database server 104, the computing device 106, and one or more devices, sensors, or equipment installed in the premises 108 may be configured to communicate with each other via a communication network such as a network 110.

The application server 102 is a framework, a type of software engine, that delivers applications to client computers or devices. The application server 102 may act as a middle layer between the end-user interface and the backend database and business applications, enabling the hosting and delivery of high-level applications, often web based. The application server 102 may be configured to primarily manage the logic of one or more applications. This means that the application server 102 may be configured to handle the execution of program commands, computation, data retrieval, and performance tasks. The application server 102 may be further configured to facilitate the connection between front-end interfaces and back-end databases and servers. The application server 102 may be further configured to enable applications to scale to handle increased loads and can manage sessions across multiple servers. The application server 102 may be further configured to include an API gateway or management tools to control access to one or more APIs. The application server 102 may be further configured to offer features to secure the one or more applications, like SSL encryption, secure authentication mechanisms, and authorization services. The application server 102 may come with monitoring tools to help track the performance and health of the one or more applications and may provide logging and auditing services.

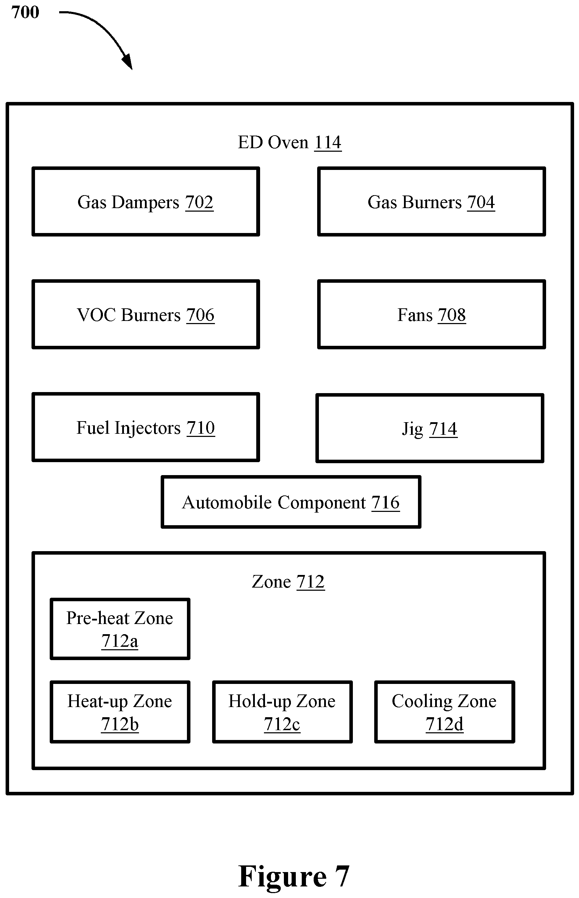

In an exemplary embodiment, the application server 102 may serve as a robust platform for hosting and executing various models, which may include machine learning (ML) models, deep learning (DL) models, reinforcement learning (RL) models, and other computational and performance-based models. The application server 102 may be involved in a data processing pipeline that covers collection, preprocessing, transformation, and storage of data. The application server 102 may be capable of running different types of models. These could be algorithms or programs designed for specific tasks such as model training and learning, predictive analytics, simulations, computations, authentications, data preparation, or data processing. The application server 102 may be designed to receive a variety of data inputs from multiple sources. For example, operational data may come from one or more sensors and Internet of Things (IoT) devices (as shown by 116 installed in the premises 108) that monitor and measure one or more variables like at least one of: an amount of time spent by each jig in each zone including at least one of a pre-heat zone, a heat-up zone, a hold-up zone, and a cooling zone of the ED oven 114, speed of each jig in each zone of the ED oven 114, effective metal temperature (EMT) of the automobile component (shown by 716 in Figure 7) at different jig positions in the ED oven 114, power consumption, fuel flow rate, fuel consumption, fan speed, supply and return temperature, and initial temperature of the automobile component. Further, other data (such as air flow, burner temperature, zone pressure, etc.) may also come from the sensors and IoT devices 116. Further, design data including at least one or more specifications of at least one or more equipment associated with the ED oven 114 may come from the database server 104. The equipment may correspond to at least one or more gas dampers, gas burners, VOC burners, recirculating fans, cooling fans, hot air fans, and fuel injectors. The design data may also come from a user-computing device (not shown) of a user who can manually enter or provide this data and then send it to the application server 102 or the database server 104. In addition to the operational data and the design data, key performance indicators (KPIs), constraints, or objectives may also be received from an appropriate and applicable source such as the database server 104, digital twin 112, sensors and IoT devices 116, or user-computing device. The various types of data (as described above but not limited to) may be received by the application server 102 in real-time or near real-time or based on a scheduled time as per the industry or application requirement or as defined by an admin user.

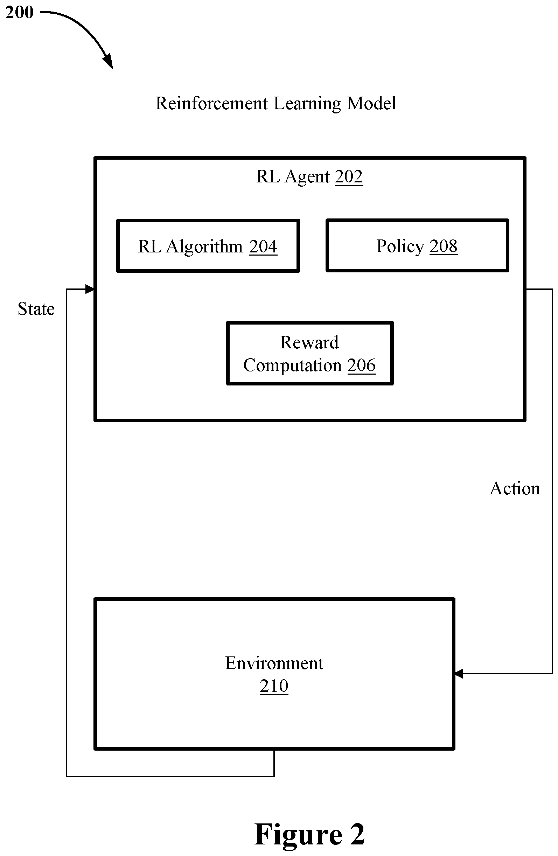

In the context of the ED oven process, the application server 102 may be configured to manage, regulate, and/or control the one or more gas dampers and fans based on one or more optimal outcomes and optimize at least one of fuel flow rate, fuel consumption, fan speed, and fan power consumption, while maintaining at least EMT of the automobile component in a recommended range in the ED oven 114. To do so, the application server 102 may receive the collected operational and design data. The application server 102 may further receive at least one or more constraints and KPIs from the database server 104, the digital twin 112, the user-computing device (not shown), or any combination thereof. After receiving the one or more type or forms of data, the application server 102 may preprocess the unstructured data collected from the one or more sources. This may involve filtering out noise from the data, normalizing readings from different types of equipment, or converting free-form text feedback into quantifiable metrics. Further, using one or more containers, the application server 102 may process the cleaned data, applying transformation functions to create a structured dataset. This may involve standardizing data formats, timestamping, and organizing data into relational structures for easy access and analysis. The transformed data may then be stored in a structured form, likely in the database server 104, where it can be easily accessed for real-time decision-making or analysis. For example, the one or more type or forms of data may be used for building or creating the digital twin 112 of the ED oven 114 associated with the automobile paint shop. Further, the one or more type or forms of data and/or one or more models of the digital twin 112 may be used for training an RL model or agent (as shown by 202 in Figure 2), and then configuring it to learn one or more control strategies for generating one or more policies. Each policy may include at least opening percentage of the one or more gas dampers and speed of the one or more fans. Further, the application server 102 or the RL model running on the application server 102 may output at least one policy including at least an optimal opening percentage of at least one gas damper and an optimal speed of at least one fan. In an exemplary embodiment, based on the output policy, the application server 102 may be further configured to generate and send one or more commands or signals to the ED oven 114 to adjust the damper opening and fan speed. For example, the at least one gas damper may be operated based on the corresponding optimal opening percentage that can lead to optimization of the fuel flow rate, and the at least one fan may be operated based on the corresponding optimal speed that can lead to optimization of the energy consumption.

The database server 104 is a computer system that provides other computers, servers, and applications with services related to accessing and retrieving data stored in databases. It is a key component in a client-server architecture, where it is dedicated to managing database resources, executing database operations, and ensuring data integrity and security. Examples of the database server 104 include, but are not limited to, Relational Database Servers, NoSQL Database Servers, and In-Memory Databases. The database server 104 is a repository of current and historical data, which is essential for monitoring the system's performance, optimizing operations, and ensuring fuel and energy savings. In the context of the ED oven process, the database server 104 may be responsible for storing all the unstructured or structured data, such as the operational data, the design data, and the KPI, objective, or constraint data. In an embodiment, the database server 104 may be further configured to store the one or more control strategies and the corresponding polices. In an embodiment, the database server 104 may be further configured to store the predicted outcomes with respect to at least one of the gas flows in all zones of the ED oven 114, air flow in all zones of the ED oven 114, burner temperature of all burners of the ED oven 114, temperature values in all zones of the ED oven 114, oven pressure, and oven power consumption. In an embodiment, the database server 104 may be further configured to store the optimal outcomes such as the optimal opening percentage of at least one or more gas dampers and the optimal speed of at least one or more fans such as the recirculating fans, cooling fans, or hot air fans, or any combination thereof.

The computing device 106 is an electronic device that is capable of processing, storing, and retrieving the required data to perform some kind of computations and operations. Such devices usually allow for input and output operations, making them interactive tools for a wide array of applications. One or more users may input data into the computing device 106 through various means, such as keyboards, touch screens, mice, voice recognition, sensors, and cameras. The computing device 106 may convey the results of their computing processes to the users via outputs like displays, speakers, printers, and actuators. Examples of the computing device 106 may include, but are not limited to, personal computer(s), desktop(s), laptop(s), smartphone(s), tablet(s), or wearable device(s).

In an embodiment, the computing device 106 may be used by a user to build or create or simulate a virtual representation i.e., the digital twin 112 of an installed system such as the ED oven 114. In an embodiment, the computing device 106 may be further configured to run software or applications that may allow or assist the user to design and simulate the digital twin 112 of the ED oven 114, creating a multi-dimensional model that can be visualized in one-dimension (1D), two-dimension (2D), or three-dimension (3D) interfaces. In an embodiment, the user may build, create, or simulate the digital twin 112 by at least following steps including one or more of: (1) Data collection: Gather the data from the physical environment 108 via the sensors and IoT devices 116 or from manual input, (2) Modeling software: Use specialized software on the computing device 106 to build the digital twin model. For structural elements, CAD software may be used, while simulation software may be employed for systems and operations, (3) Integration: Incorporate the data feeds into the model to reflect the real-time status of the physical counterpart, (4) Simulation and Analysis: Run simulations on the computing device 106 to predict outcomes, analyze scenarios, and plan for interventions, and (5) Refinement: Adjust the model based on feedback and analysis to ensure it accurately represents the ED oven 114 and can predict its behavior reliably.

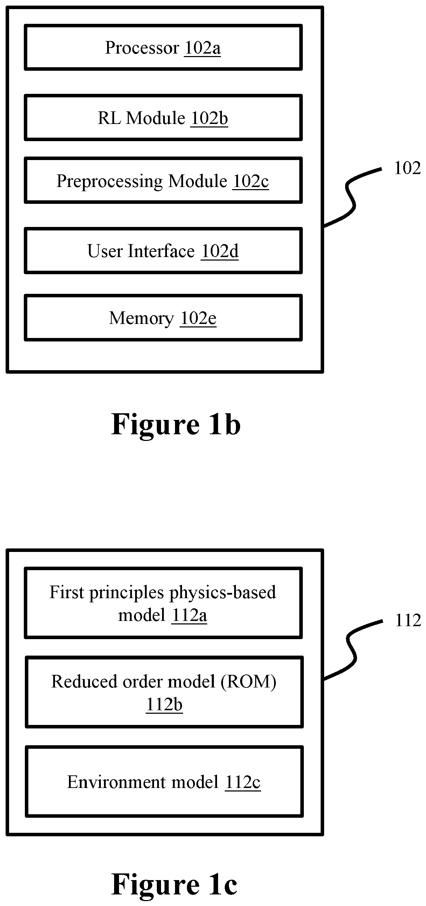

In an embodiment, the digital twin 112 may be configured to simulate the ED oven 114 based on the collected operational data and design data. For example, after preprocessing of at least the collected operational data, a first principles-based modelling software (running on the computing device 106 or the application server 102) may be used to create or simulate the first principles physics-based model based on the processed operational data and the design data. Further, the ROM may be generated from the first principles physics-based model and simulation. The ROM may include at least design of experiments (DoE) data and outputs of the DoE data. Further, the one or more environment models (corresponding to at least the EMT of the automobile component at one or more jig positions in each zone, the fan speed, the damper position and opening, the fan power consumption, the fuel flow rate, zone temperature (i.e., air temperature in each zone), the return temperature from the one or more zones (i.e., temperature at which air is returning from the zones through the recirculating fans), and the supply temperature to the one or more zones) may be generated based on at least the corresponding ROM data. Thus, in an embodiment, the digital twin 112 may include at least one of the first principles physics-based model (as shown by 112a in Figure 1c), the ROM (as shown by 112b in Figure 1c), and the one or more environment models (as shown by 112c in Figure 1c). Once the digital twin 112 has been established and validated, the computing device 106 may be used to simulate one or more scenarios, analyze system performance, and optimize operations based on the data received from the physical counterpart.

The premises 108 refers to an environment or industrial plant where various systems and services are installed to make the space functional and ready for production and operation. This can include infrastructure or plants such as an automobile paint shop used for painting, baking, and curing of one or more automobile components or parts (such as metallic parts of a vehicle e.g., a car, a bike, etc.), but should not be construed as limiting to the scope of the present disclosure. The premises 108 may include one or more ED ovens such as the ED oven 114 required for baking and curing the painted automobile component(s), one or more sensing and monitoring devices such as the sensors and IoT devices 116 used for sensing and measuring data, one or more dashboards such as a dashboard 118, and one or more control interfaces such as a control interface 120, but should not be construed as limiting to the scope of the present disclosure.

In an embodiment, the ED oven 114 may be installed in the premises 108 for baking and curing of the painted automobile component(s). The ED oven 114 may include several components that work together to ensure that the painted automobile components are baked and cured to perfection. The ED oven 114 may include at least the one or more gas dampers, gas burners, volatile organic compound (VOC) burners, recirculating fans, cooling fans, hot air fans, and fuel injectors. The burners are used to heat the oven. They are responsible for converting the fuel into heat energy. The heat generated by the burners may be used to bake and cure the painted automobile components. The gas dampers or valves are devices that regulate the flow of gas in the oven. They are used to control the temperature inside the oven by adjusting the amount of gas that is burned. The gas dampers may be essential for maintaining a consistent temperature throughout the oven. The VOC burners are used to burn the particulate matter in the exhaust gas into smaller and non-toxic components before releasing them into the atmosphere. The recirculating fans are used to circulate the hot air inside the oven. They help to maintain a consistent temperature throughout the oven. The recirculating fans may also help to ensure that the painted automobile components are baked and cured evenly. The fuel injectors are used to inject fuel into the burners. They are responsible for ensuring that the burners have a steady supply of fuel. The fuel injectors may be essential for maintaining a consistent temperature throughout the oven. The ED oven 114 may include a carrier including one or more jigs (shown by 714 in Figure 7). The carrier may be used to move the painted automobile components through the oven by means of the one or more jigs. They are designed to withstand high temperatures and are made of materials that are resistant to corrosion. While the jigs are commonly used, some embodiments may utilize Body-in-White (BIW) systems or conveyors as alternatives. The BIW refers to the stage in automotive manufacturing where the car body's sheet metal components have been welded together but before other components (like the engine, chassis, or interior elements) are added. In ED oven setups that use BIWs, the entire body in this preliminary stage is processed through the ED oven 114. This approach allows for the simultaneous coating of all external sheet metal surfaces of the automobile body. Conveyors are another alternative to jigs, providing a continuous and automated way to move parts through the ED oven 114. They can be designed to carry individual components or partially assembled sections of the vehicle through the different zones of the ED oven 114. The choice between jigs, BIWs, or conveyors depends on various factors, including the scale of production, the size and type of components being coated, and the specific requirements of the coating process.

In an embodiment, the sensors and IoT devices 116 may be installed in the premises 108. The sensors and IoT devices 116 are an integral part of the premises 108 including the ED oven 114. They are used for sensing things and devices. The sensor attains a physical parameter and converts it into a signal suitable for processing (e.g., electrical, mechanical, optical) the characteristics of any device or material to detect the presence of a particular physical quantity. The output of the sensor is a signal which is converted to a human-readable form like changes in characteristics, changes in resistance, capacitance, impedance, etc. The sensors and IoT devices 116 are essential for the ED oven 114, as they help to monitor and control the one or more process parameters such as power, temperature, pressure, humidity, air flow, and/or fuel flow associated with the ED oven process but should not be considered as limiting to the scope of the present disclosure. This may help to ensure that the painted automobile components are baked and cured to perfection. The sensors may also help to detect any issues with the ED oven 114, such as a malfunctioning burner or a clogged filter. This can help to prevent downtime and reduce maintenance costs. There are various types of sensors such as accelerometers, air quality sensors, image-capturing sensors, chemical sensors, current sensors, voltage sensors, flow sensors, gyroscopes, humidity sensors, level sensors, motion sensors, pressure sensors, proximity sensors, occupancy sensors, and temperature sensors. Other sensors may include SDPT sensors, SAT sensors, RAT sensors, RRH sensors, airflow sensors, velocity sensors, fan speed sensors, chilled/hot water valve opening sensors, and chilled/hot water inlet temperature sensors. One or more of these sensors may be used for monitoring and measuring the required process parameter(s). The IoT devices may be used to collect the data from the sensors and other components of the ED oven 114. Thus, the sensors and IoT devices 116 may integrate with the existing setup to collect the data from the premises 108 and communicate the collected data to the application server 102 or the database server 104.

In an embodiment, the dashboard 118 is a graphical user interface (GUI) that may be configured to display information and allow interaction with the disclosed system or process. The dashboard 118 may include various features, such as buttons, sliders, graphs, charts, tables, and input and output indicators. The dashboard 118 may be used for various purposes, such as monitoring, controlling, analyzing, and optimizing the disclosed system or process. In the automobile paint shop plant, the dashboard 118 may be used to manage the painting, baking, and curing of the automobile component(s). In an embodiment, the dashboard 118 may allow the user to input data or commands that affect the operation of the ED oven 114, such as the power supply, damper opening, temperature, pressure, fuel flow rate, and the like. The user can also adjust the settings of at least one of: the power supply, the fuel flow rate, the temperature value, the cooling system, and the like. In an embodiment, the dashboard 118 may display the output data or results of the ED oven 114, such as the energy consumption, zone temperature, oven pressure, gas flow, air flow, efficiency, quality, and the environmental impact but should not be construed as limiting to the scope of the present invention.

In an embodiment, the control interface 120 is a device or a software (or a combination thereof) that allows the user or an application to interact with and control the ED oven 114. It can display the status, the parameters, and the performance of the ED oven 114 and its components. It can also receive the input data or commands from the application server 102, the database server 104, the computing device 106, the digital twin 112, or the user (such as an admin user) and communicate them to the relevant devices or controllers that regulate the operation of the ED oven 114. In an embodiment, the control interface 120 may be installed in the premises 108 as a standalone device for supporting the operation of the ED oven 114. This serves as a command center for the ED oven 114, where adjustments to the system's operation may be made. It is a communication hub that receives instructions to alter one or more operational settings of the ED oven 114. The instructions may be received from the application server 102, the database server 104, the computing device 106, or the digital twin 112 via the network 110 without limiting the scope of the present disclosure. In an exemplary embodiment, the control interface 120 receives a command from an RL agent (as shown by 202 in Figure 2) to reduce fans speed of a recirculating fan by 15% by lowering down the power supply to the recirculating fan by 7% and reduce gas damper openings by 12%. The control interface 120 may then send this instruction to one or more regulators or controllers or actuators. For example, the control interface 120 may send the fans speed controlling instruction or command to a power regulator (which is a device that controls the input power supply to the fans according to the received command or the system's requirement) and the control interface 120 may send damper controlling instruction or command to a damper regulator (which is a device that adjusts opening of gas dampers according to the received command or the system's requirement). The power regulator may then reduce the power supply to the fans by 7 percent and the damper regulator may decrease the gas damper opening by 12 percent. Such regulation may minimize the consumption of energy and fuel by the ED oven 114, thereby causing energy and fuel savings during the ED oven process. The above example has been included for illustrative purposes only and should not be construed as limiting to the scope of the present invention.

The network 110 is a communication channel between two or more computers or devices that are linked together to share resources, exchange files or commands, or allow electronic communications. The computers on the network 110 may be linked through cables, telephone lines, radio waves, satellites, or infrared light beams. Examples of wired networks may include, but are not limited to, ethernet networks, fiber optic networks, telephone networks, power line communications (PLC), and coaxial networks. Examples of wireless networks may include, but are not limited to, Wi-Fi networks, cellular networks, Bluetooth, satellite networks, near field communication (NFC), Zigbee and Z-Wave. The network 110, be they wired or wireless, plays a critical role in the connectivity of devices and servers in the system environment 100. In an installation like the automobile paint shop, the network 110 may be configured to facilitate communication between sensors, regulators, controllers, actuators, ovens, security systems, and the various servers and devices that manage operations and data storage. Further, the network 110 may be configured to support the transfer of the operational and design data (either real-time or historical) to the application server 102 where it is processed, analyzed, and turned into actionable insights.

Figure 1b is a diagram that illustrates components of the application server 102, in accordance with an embodiment of the present invention. The application server 102 may include one or more components such as at least one of: a processor 102a, an RL module 102b, a preprocessing module 102c, a user interface (UI) 102d, and a memory 102e but these mentioned components should not be construed as limiting to the scope of the present disclosure. Each component is intricately linked, ensuring the application server 102 functions as a cohesive unit. The processor 102a ensures swift and accurate execution of tasks, the RL module 102b adapts and optimizes operational strategies, the preprocessing module 102c guarantees the quality of data fed into the system 100, the UI 102d provides a user-friendly platform for interaction with the system 100, and the memory 102e provides a storage mechanism or medium for storing the data, logics, code, algorithms, models, and the like. Together, these components and others may form a robust framework for optimizing the baking and curing process, ensuring efficiency, precision, and ease of operation.

The processor 102a is the core computing unit of the application server 102, responsible for executing program instructions and managing the system's operations. Its primary function is to process complex calculations rapidly, handle multitasking between various components of the system 100, manage the flow of data, and process the data and applications. For instance, the processor 102a may be responsible for running simulations by using the digital twin 112, processing large datasets for the RL module 102b, and ensuring real-time responsiveness. It may handle tasks like calculating the energy or fuel efficiency for different operational settings or running predictive models to forecast future process outcomes. The processor's efficiency is crucial in managing these computationally intensive tasks without lag, ensuring the system's overall smooth functioning.

The RL module 102b is a specialized component that applies one or more types of learning techniques to optimize one or more process or operational parameters. It learns from the simulations of the digital twin 112 and/or its models such as the one or more environment models, developing the one or more control strategies for controlling and optimizing the one or more variables such as the fuel flow rate, fan power consumption, fan speed, EMT, burner outlet temperature, and time spent for each unit process. For example, the RL module 102b may be configured to analyze data patterns to identify optimal process parameters that can yield the highest savings in at least one of the energy and fuel consumption. The RL module 102b may also adapt its strategies based on ongoing feedback or real-time data processing, thereby continuously refining its approach to maintain optimal process conditions.

The preprocessing module 102c is essential for preparing and refining the data before it is used in the system 100. It cleans, normalizes, and structures incoming data, ensuring its quality and consistency. This might involve filtering out irrelevant data points, correcting errors, or transforming data formats. The preprocessing is crucial because the accuracy and reliability of the system's simulations and predictions heavily depend on the quality of the input data. The preprocessing module 102c may be configured to perform the data preprocessing which includes, but is not limited to, filtering out noise, dealing with missing values, and normalizing the data. Missing data may be handled by imputation methods where the system predicts the missing value based on the available data, or by using models like the digital twin 112 that can simulate the missing data points. Further, invalid data, identified through anomaly detection algorithms, may be either corrected or removed to prevent it from skewing the analysis. The structured data may then be used to train the RL agent 202 and make it learn to formulate the one or more control strategies and generate the corresponding policies.

The UI 102d is the visual and interactive component through which one or more operators may visualize, control, and monitor the one or more operations and functionalities of the system 100. It is designed for clarity and ease of use, presenting complex data and system statuses in an understandable format. For example, the UI 102d may display a real-time dashboard with key metrics like power supply settings, fan speed, temperature readings, energy consumption, fuel consumption, EMT, supply and return temperature, time spent by each jig and speed of each jig in each zone, and the like. The UI 102d may also allow the one or more operators to input new settings, respond to system alerts, or access historical data reports. The UI 102d may be crucial for bridging the gap between the system's advanced technical operations and the user, enabling efficient and informed decision-making.

The memory 102e stores data and programs that are used by the applications running on the application server 102. The memory 102e may allow the applications to access the data and programs faster. The memory 102e may also enable the applications to share data and programs among different users and processes.

Figure 1c is a diagram that illustrates the models of the digital twin 112, in accordance with an embodiment of the present invention. The system's integration of the digital twin 112 for the ED oven 114 is a pivotal aspect, offering a sophisticated approach for optimizing the ED oven process. The digital twin 112 is a comprehensive virtual representation, crafted and simulated using the collected operational data and the design data. The digital twin 112 may include several interconnected models, each serving distinct but complementary purposes. For example, the digital twin 112 may include at least one of: the first principles physics-based model 112a, the ROM 112b, and the one or more environment models 112c.

The first principles physics-based model 112a is the foundational layer of the digital twin 112. The model 112a is a comprehensive representation of the ED oven 114 based on physical laws. It incorporates the operational data and the design data. The model 112a simulates the oven's behavior by applying physical laws and equations that govern the ED oven operation. For example, it might use the principles of thermodynamics to predict how heat is generated by the burners and distributed throughout the ED oven 114. The operational data may provide real-time conditions, while the design data may define the oven's physical constraints and capabilities.

The ROM 112b is designed to provide a faster computational solution while still maintaining a high degree of accuracy. The ROM 112b includes at least the DoE data and outputs of the DoE data. The ROM 112b may enable quick simulations and predictions, making it an invaluable tool for real-time decision-making and control. In an embodiment, the ROM 112b may be generated from the first principles physics-based model 112a to make computations more manageable while retaining essential characteristics and behaviors of the ED oven 114. The ROM 112b uses DoE methodology to explore the relationship between various input and process variables and their impact on the oven's operation. For instance, if we consider three input variables, such as gas flow rate, EMT, and fan speed, each with five possible values, the ROM 112b explores all combinations (5^3 = 125 different scenarios). For each scenario, it computes the expected outputs, like the efficiency of fuel usage or power consumption. This process creates a comprehensive dataset that captures how changes in inputs affect the outputs, providing a valuable tool for understanding and predicting the oven's behavior.

The environment models 112c represent the various external and internal factors that can influence the ED oven process. These models 112c are tailored to simulate different scenarios, conditions, and operational contexts in which the ED oven 114 might operate. They are typically built using a combination of data-driven approaches, such as machine learning algorithms, and empirical data. In an embodiment, the environment models 112c may be generated based on the ROM 112b i.e., the DoE data and outputs of the DoE data. In some embodiments, the environment models 112c may also be generated based on the operational data along with the DoE data and their outputs. These models 112c may be configured to simulate specific aspects of the oven's operation, such as behavior of the one or more burners or burner temperatures, the gas flows, the air flows, the return temperature from the one or more zones (i.e., temperature at which air is returning from the zones through the recirculating fans), the supply temperature to the one or more zones, the zone pressure, the EMT of the automobile component at the one or more jig positions in each zone, the fan speed, the damper position, the fan power consumption, the fuel flow rate, and the zone temperature (i.e., air temperature in each zone). For example, the environment model 112c may use the ROM's data to predict how changing the gas flow rate affects the temperature in different zones of the ED oven 114. These models 112c are useful for testing and developing control strategies because they provide a focused view of specific parts or processes within the ED oven 114. For example, these models 112c are particularly useful for training the RL agent (202 as shown in Figure 2), as they provide a diverse range of scenarios for the RL agent 202 to learn from. The RL agent 202 may use these environment models 112c to understand how different conditions affect the process and to develop strategies and policies for optimizing performance under various circumstances.

In essence, the digital twin 112, with its composite models, acts as a dynamic, virtual replica of the actual ED oven process. It provides a powerful tool for simulation, prediction, validation, and optimization, enabling a deeper understanding and more efficient control of the ED oven process. The integration of these one or more models 112a, 112b, and 112c ensures that the digital twin 112 is not only accurate and reflective of the real-world process but also adaptable and responsive to changing conditions and operational needs.

Figure 2 is a diagram that illustrates the RL model 200 (i.e., the RL module 102b of Figure 1b), in accordance with an embodiment of the present invention. In reinforcement learning, an agent is configured to learn to make decisions by performing one or more actions in an environment to achieve a goal. The RL model 200 includes several key components such as the RL agent 202. This is the decision-maker that learns from an environment 210 (for example, it may correspond to the one or more environment models 112c) through interactions. The RL agent 202 executes one or more RL algorithms 204 (such as Q-learning, Deep Q Networks (DQN), or Policy Gradients) and makes observations, takes actions, and receives feedback in the form of rewards. The environment 210 is everything the RL agent 202 interacts with and may be external to the RL agent 202. In the RL model 200, the environment 210 represents a space or context in which the RL agent 202 may operate. The environment 210 is useful for testing and developing control strategies because it provides a focused view of specific parts or processes within the ED oven 114. For example, the environment 210 is particularly useful for training the RL agent 202, as they provide a diverse range of scenarios for the RL agent 202 to learn from. The RL agent 202 may use the environment 210 to understand how different conditions affect the process and to develop strategies and policies for optimizing performance under various circumstances. Further, a state is a concrete and immediate description of the situation in which the RL agent 202 finds itself. It is the specific condition or context within the environment 210 at a particular time. Further, actions are a set of possible moves or decisions or strategies the RL agent 202 may make in any given state. Each action taken by the RL agent 202 may lead to a new state and a corresponding reward.

The reward computation 206 may be a feedback signal to the RL agent 202 that rates the success of an action. This is a mechanism by which the RL agent 202 assesses the success of its actions. A reward function in this context may assign higher rewards for actions that lead to reduced energy and/or fuel consumption. In an embodiment, the reward function may be based on at least one of the fuel flow rate, fan power consumption, fan speed, EMT, burner outlet temperature, and time spent for each unit process, and the RL agent 202 may learn by maximizing the received positive rewards for more desired outcomes and by minimizing the received negative rewards for less desired outcomes. Further, the reward function may compute this signal, which is used to guide the agent's learning process. It incentivizes the RL agent 202 to make optimal decisions that will maximize rewards or cumulative rewards over time. In an embodiment, the reward function may be manually specified by a designer, based on domain knowledge. In another embodiment, the reward function may be learned from expert demonstrations, by inferring the underlying preferences and objectives of the expert. In another embodiment, the reward function may be based on the agent's intrinsic motivation to explore and learn new things, rather than on extrinsic rewards from the environment 210.

Further, the policy 208 is a strategy that the RL agent 202 employs to decide its actions at each state. It is essentially a mapping from one or more states to one or more corresponding actions, and the goal of the RL agent 202 is to learn and update the policy 208 that maximizes the expected reward in real-time or the expected sum of rewards over time. In the ED oven process for baking and curing the coated automobile part(s), the policy 208 may involve a set of rules or strategies that optimizes (e.g., minimizes) the fuel and energy consumption under different operating conditions. In an exemplary embodiment, the policy 208 may include at least the optimal opening percentage of the one or more gas dampers and the optimal speed of the one or more fans. The policy 208 may be refined and updated over time as the RL agent 202 learns from new experiences and scenarios.

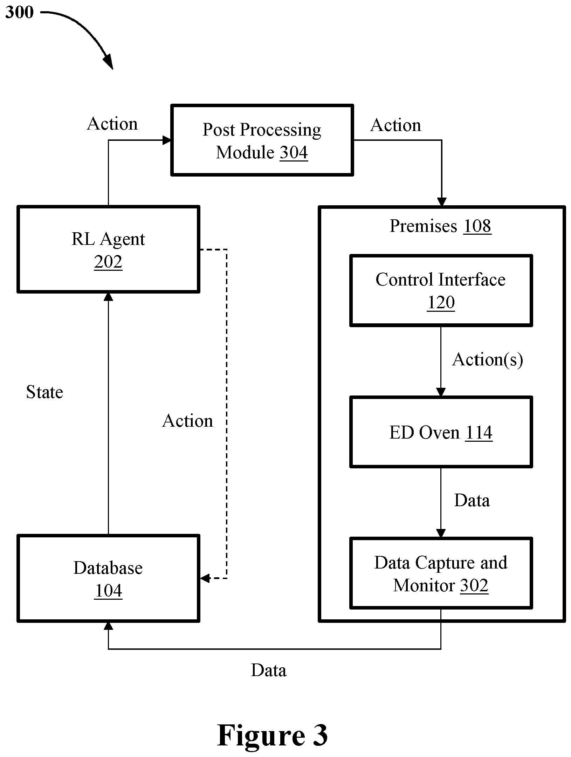

Figure 3 is a diagram that illustrates an exemplary fuel and energy optimization system 300 of the ED oven 114 in the premises 108 (i.e., the automobile paint shop 108) by utilizing the RL agent 202, in accordance with an embodiment of the present invention. As shown, the system 300 includes at least the RL agent 202, the database 104, a post-processing module 304, and the premises 108 equipped with the control interface 120 and the ED oven 114 complimented by a data capture and monitoring system 302.

The system 300 is designed to control or regulate the fuel supply and power supply to the ED oven 114 for achieving optimization in at least one of the fuel and power consumption. For example, the disclosed system 300 aims to minimize the energy and fuel consumption while ensuring that the one or more constraints are met by setting the one or more optimal values for the one or more process parameters, thereby enabling savings in at least one of the power and fuel consumption. The constraints may include at least one or more of: (1) EMT - goal is to maintain the EMT of the automobile component at different jig positions as per automobile component's requirement, (2) burner outlet temperature - goal is to maintain the burner outlet temperature of the one or more gas burners in a predefined range, (3) optimal time spent - goal is to maintain the optimal time spent for each unit process i.e., the automobile component(s) should spent an optimal amount of time duration at the one or more jigs in one or more of the pre-heat zone(s), heat-up zone(s), hold-up zone(s), and cooling zone(s), (4) energy consumption - goal is to maintain energy consumption between minimum and maximum energy consumption levels. This involves managing the power supply efficiently to avoid excess energy use while ensuring the ED oven 114 operates effectively, and (5) fuel flow rate - goal is to maintain the fuel flow rate between minimum and maximum fuel flow levels. This involves controlling the supply of fuel to the burners to optimize combustion efficiency and reduce waste. The minimum and maximum energy consumption levels or fuel flow levels may be determined based on at least the energy consumption or fuel flow levels obtained though analysis of the historical operational data including at least the historical energy consumption data or the historical fuel consumption.

In an embodiment, the control interface 120 may serve as a command center for the ED oven 114, where adjustments to the system's operation are made in real-time or near real-time. In an embodiment, the data capture and monitoring system 302 may be powered by the array of sensors and IoT devices 116 (Figure 1a) to continuously gather the data. In an embodiment, the database 104 serves as a repository for all collected data including at least the operational data, the design data, and the constraint data. In an embodiment, the RL agent 202 is a computational model that receives state data in real-time or near real-time from an environment such as the database 104, or from a physical environment (i.e., from the data capture and monitoring system 302), or from a virtual environment (i.e., from the digital twin 112 or the one or more environment models 112c), or any combination thereof. The state data may represent the one or more current conditions or variables of the ED oven 114. For example, the states data may include at least one or more of the real-time predictions with respect to at least the EMT of the automobile component at the one or more jig positions in each zone, the fan speed, the damper position, the fan power consumption, the fuel flow rate, the zone temperature (i.e., air temperature in each zone), the return temperature from the one or more zones (i.e., temperature at which air is returning from the zones through the recirculating fans), and the supply temperature to the one or more zones. Using at least the state information, the RL agent 202 may apply its learned policy 208 to decide on the optimal control strategy or action to take to achieve its objectives, such as optimizing the fuel flow rate and power supply, ensuring the one or more constraints are met by setting the one or more optimal values for the one or more process parameters, thereby enabling savings in at least one of the energy and fuel consumption. The actions are the decisions or changes or control strategies the RL agent 202 may make to influence and optimize the ED oven process. For example, the one or more actions may include at least one of: (1) operating the at least one gas damper based on the corresponding optimal opening percentage that leads to optimization of the fuel flow rate and (2) operating the at least one fan based on the corresponding optimal speed that leads to optimization of the energy consumption.

In some embodiments, once the RL agent 202 proposes the one or more actions, these actions may go through a validation process within the post-processing module 304. This may include simulated testing against the software environment or digital twin 112 of the ED oven 114 to ensure that the proposed actions will have the desired effect without causing system instability. If the one or more actions are successfully validated, then the post-processing module 304 may confirm that they are safe and effective to implement. Upon successful validation, the post-processing module 304 or the RL agent 202 or the database 104 may communicate the approved actions to the control interface 120. This communication may occur over the wired or wireless network 110, using standard protocols to ensure interoperability between different system components. Further, in an embodiment, the control interface 120 may be configured to translate the received actions into specific commands for the ED oven 114. If the action involves reducing power by X% and reducing gas damper openings by Y%, the control interface 120 may generate and send a command to the power regulator or controller or actuator for reducing power by X% and a command to the gas damper regulator or controller or actuator for reducing gas damper opening by Y%.

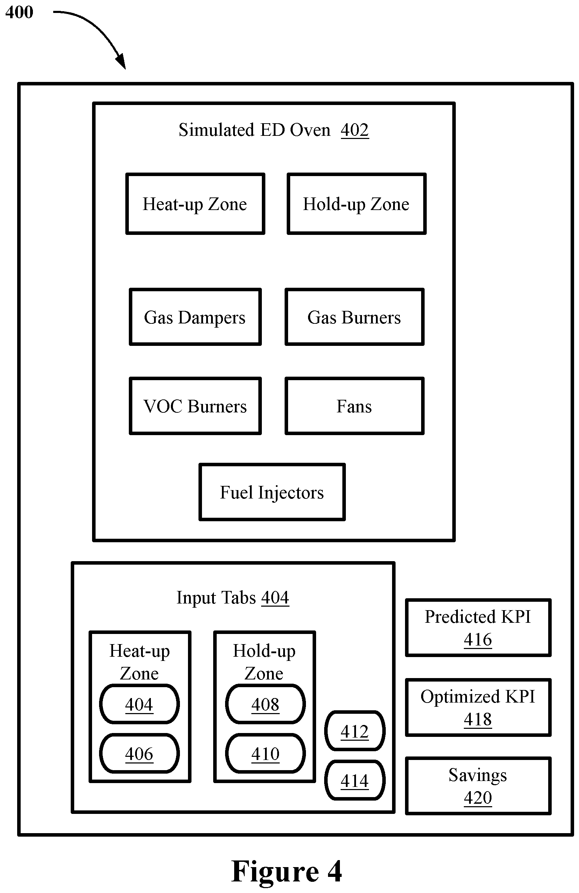

Figure 4 is a diagram that shows a dashboard 400 illustrating online interaction of the simulated ED oven 402, in accordance with an embodiment of the present invention. The dashboard 400 is a graphical user interface (GUI or UI) designed for showing or simulating the online deployment and interaction of the simulated ED oven 402 (such as the digital twin 112 of Figure 1) with the RL agent 202 (Figure 2), specifically tailored for managing and optimizing the ED oven process.

As shown, the ED oven block 402 on the dashboard 400 presents a simulated version of the ED oven 114, including critical components or equipment such as the one or more gas dampers, gas burners, VOC burners, fans, and fuel injectors, and one or more zones such as the heat-up zone and hold up zone. This simulation offers a virtual representation of the oven's functioning, allowing for detailed monitoring and analysis. Further, the dashboard 400 may include several input tabs 404, enabling the one or more users to enter various operational parameters. For example, the input tab 404 may be used for entering fan speed required in the heat-up zone and the input tab 406 may be used for entering fuel flow rate required for the heat-up zone. Further, the input tab 408 may be used for entering fan speed required in the hold-up zone and the input tab 410 may be used for entering fuel flow rate required for the hold-up zone. In some embodiments, these data related to the fan speed and the fuel flow rate may also be automatically retrieved from the database 104 or a local memory. These inputs are critical for tailoring the oven's operation to specific requirements. In real-time implementation, the one or more values may be automatically sourced from the sensors 116 or the database 104, or from both without limiting the scope of the present invention.

Further, the dashboard 400 may include a predict tab 412 and an optimize tab 414. In an embodiment, pressing the predict tab 412 may activate the digital twin 112 or its environment model 112c. Based on the input data, the digital twin 112 or its environment model 112c may process and provide the real-time predictions on key performance indicators (KPIs) like fan power, fan speed, fuel flow rate, zone temperature, return temperature, EMTs at different jigs, and the like, which are associated with the heat-up and hold-up zones. Based on this, the predicted KPI interface 416 may display the predicted data such as the fan power, fan speed, fuel flow rate, zone temperature, return temperature, and EMTs at different jigs. Further, the optimization tab 414, when activated, engages the RL agent 202, which analyzes at least one of the input data, the predicted data, or the real-time operational data to optimize the fuel and power consumption. The optimized KPI interface 418 may display these optimized values, and the savings interface 420 may display the percentage savings in the fuel and power supply. This feature is crucial for achieving cost-effective and efficient oven operation. If the optimizations are deemed acceptable and align with the one or more constraints, the optimal values, such as the optimal opening percentages for the gas damper(s) and the optimal fan speed(s), may be implemented to realize tangible improvements in energy and fuel efficiency. This integration of simulation, prediction, and optimization in a user-friendly dashboard provides a powerful tool for the operators, enabling them to make data-driven decisions for enhanced operational efficiency.

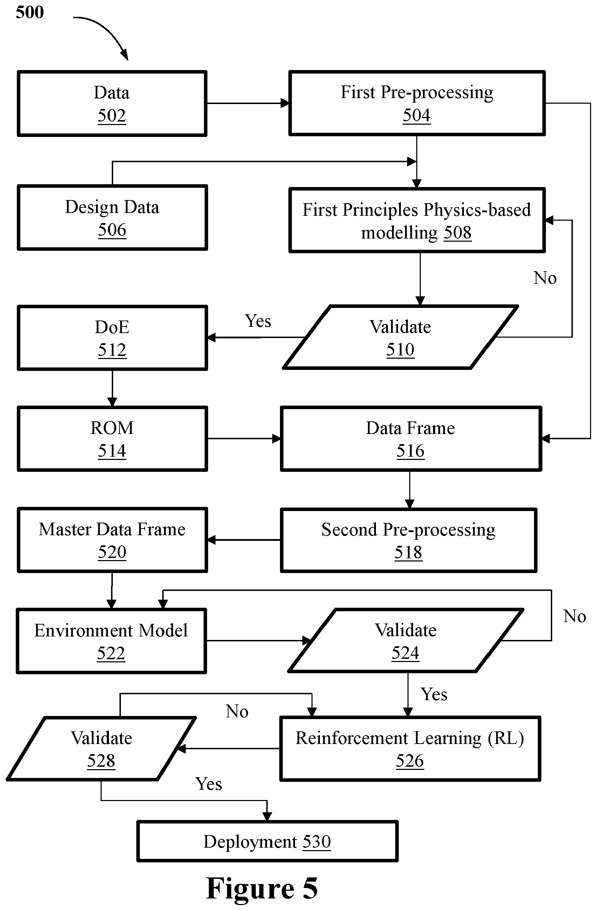

Figure 5 is a diagram that illustrates a flowchart 500 of a method for developing an optimization solution for deployment, in accordance with an embodiment of the present invention.

At step 502, the operational data is received. In an embodiment, the application server 102 may be configured to receive the operational data (either real-time data or historical data, or a combination thereof) from the database server 104, or directly from the sensors and IoT devices 116 or the data capture and monitor system 302. In some embodiments, the operational data may be received from a user-computing device (not shown) in a scenario where a user wants to manually enter the observed data. In an embodiment, the operational data may include at least one of the amount of time spent by each jig in each zone of the ED oven 114, the speed of each jig in each zone of the ED oven 114, the EMT of the automobile component at different jig positions in the ED oven 114, the power consumption, the fuel flow rate, the fuel consumption, the fan speed, the supply and return temperature, and the initial temperature of the automobile component. The operational data in the context of optimizing the ED oven process in the automobile paint shop is comprehensive, capturing various aspects of the oven's functioning. This data is critical for accurately simulating and subsequently optimizing the oven's performance. By analyzing at least the operational data, the system can develop a detailed understanding of the ED oven's performance. This data enables the creation of a highly accurate digital simulation of the ED oven 114 and informs the agent's decision-making process, leading to optimized oven operation for energy and fuel efficiency, while maintaining high-quality coating results.

At step 504, the first preprocessing is performed. In an embodiment, the preprocessing module 102c may be configured to perform the first preprocessing of the operational data. It may involve cleaning, normalizing, and structuring the incoming data, ensuring its quality and consistency. This might also involve filtering out irrelevant data points, correcting errors, or transforming data formats.

At step 506, the design data is received. In an embodiment, the application server 102 may be further configured to receive the design data from the database server 104 or from the user-computing device (not shown). The design data may include at least specifications of the equipment associated with the ED oven 114, such as the one or more gas dampers, gas burners, VOC burners, recirculating fans, cooling fans, hot air fans, and fuel injectors. This data includes technical and engineering details about the one or more gas dampers, gas burners, VOC burners, recirculating fans, cooling fans, hot air fans, and fuel injectors. The design data for gas dampers would detail their size, capacity, and control mechanisms. For instance, it might specify the range of opening and closing angles possible, which directly affects how much air or gas flows into the ED oven 114, influencing temperature and atmospheric conditions. The design data for gas burners may include specifications like the maximum and minimum heat output, fuel type, efficiency ratings, and physical dimensions. Such data helps in understanding how quickly the gas burners can heat the ED oven 114 and how their operation affects fuel consumption. For the VOC burners, design data would cover aspects like their emission control capacity, operational temperature range, and efficiency in processing volatile organic compounds. This is crucial for maintaining environmental safety standards. The design data for the recirculating fans may include fan speed, power requirements, airflow capacity, and size. This information is essential for determining how effectively these fans can distribute air within the ED oven 114. Specifications for the cooling fans might involve their cooling capacity, speed variability, and energy consumption. This data helps in understanding how quickly and efficiently these fans can lower the temperature of the coated components post-curing. Details for the hot air fans would include their heat distribution patterns, speed settings, and energy usage. These specifications are vital for ensuring an even heat-up process in the ED oven 114. Design data for the fuel injectors would cover aspects like the rate of fuel delivery, precision of control, and compatibility with different types of fuels. This is critical for achieving an efficient and controlled fuel supply to the burners. Having accurate design data for these components may be crucial for creating a comprehensive digital simulation of the ED oven 114. It allows for a more realistic and detailed simulation, enabling precise control and optimization strategies.

At step 508, the first principles physics-based modelling is performed. In an embodiment, the application server 102 or the computing device 106 may be further configured to perform the first principles physics-based modelling by using a first principles physics-based modelling software to obtain the first principles physics-based model 112a (Figure 1c). The first principles physics-based model 112a may be formulated and simulated based on at least one of the operational data and the design data.

At step 510, the first principles physics-based model 112a is validated. In an embodiment, the application server 102 or the computing device 106 may be further configured to perform a check to validate the first principles physics-based model 112a. The first principles physics-based model 112a may be validated based on one or more of: (1) by using real-time operational data or (2) by performing manual inspection. If at step 510, the validation is successful, then step 512 is executed, else the control goes to step 508 where the first principles physics-based model 112a is again simulated based on at least one of the operational data and the design data. Here another set of real-time operational data may be used if available.

At step 512, the DoE data is generated. In an embodiment, the application server 102 or the computing device 106 may be further configured to generate the DoE data. In some embodiments, a DoE generator (not shown) running on the application server 102 or the computing device 106 may be configured to generate the DoE data. The DoE data may be generated based on maximum and minimum values of each input variable and by using an interval for predicting one or more intermediate values between the maximum and minimum values of each input variable. For example, if a minimum value for an input variable is 100 and a maximum value for the input variable is 400, and interval is 100, then the DoE of this input variable will be 100, 200, 300, and 400. In a scenario where the number of input variables is more than 1, for example, 3 input variables, and each input variable needs to have 5 values based on its minimum value, maximum value, and defined interval, then the DoE may have rows equal to 5³ = 125 (i.e., (number of required values based on a defined interval)^{(number of input variables)}. Further, in an embodiment, the application server 102 or the computing device 106 may be configured to generate outputs of the DoE data. For example, for each row of input variables, one or more outputs may be generated corresponding to the one or more output variables.

At step 514, the ROM 112b (Figure 1c) is generated. In an embodiment, the application server 102 or the computing device 106 may be further configured to generate the ROM 112b. In some embodiments, a ROM generator (not shown) running on the application server 102 or the computing device 106 may be configured to generate the ROM 112b. The ROM 112b may be generated based on the DoE data and outputs of the DoE data. In an embodiment, the ROM 112b is a data frame that includes the DoE data and outputs of the DoE data. In DoE, each input variable is associated with a range of values, often including the minimum and maximum possible values. The range between these extremes may be divided into equal intervals to create a set of discrete values for experimentation. For instance, if an input variable like burner temperature has a minimum value of 550 and a maximum of 950, and the chosen interval is 100, then the DoE for this input variable would include values of 550, 650, 750, 850, and 950. Further, when dealing with multiple input variables, the DoE becomes more complex. Each variable may be varied across its range of values, and experiments are conducted for every possible combination of these values. For example, with six input variables, each having five discrete values, the total number of experimental combinations may be 5⁶ (i.e., 555555 = 15,625), resulting in a comprehensive exploration of the input space. Further, for each combination of input values in the DoE, the corresponding outputs are recorded. The result of this process is a dataset where each row represents a unique combination of input values and their corresponding outputs. In an embodiment, the ROM 112b integrates all this DoE data and outputs of the DoE data, thereby creating a model that encapsulates the system's behavior across a wide range of conditions. In some embodiments, the ROM 112b may also include one or more sets of optimized values or operational values. By systematically exploring the impact of various input combinations on outputs, the ROM 112b provides a valuable tool for simulation, prediction, and process optimization in the ED oven process.

At step 516, a data frame is generated. In an embodiment, the application server 102 or the computing device 106 may be further configured to generate the data frame based on the ROM 112b and the data from the first preprocessing stage (from step 504).

At step 518, the second preprocessing is performed. In an embodiment, the preprocessing module 102c may be further configured to perform the second preprocessing of the data frame (from step 516). It may involve cleaning, normalizing, and structuring the data frame, ensuring its quality and consistency. This might also involve filtering out irrelevant data points, correcting errors, or transforming data formats.

At step 520, a master data frame is generated. In an embodiment, the application server 102 or the computing device 106 may be further configured to generate the master data frame based on the second preprocessing of the data frame.

At step 522, the one or more environment models 112c are generated. In an embodiment, the application server 102 or the computing device 106 may be further configured to generate the environment models 112c based on at least the master data frame including at least the DoE data and the outputs of the DoE data. The environment models 112c may be generated by using one or more machine learning algorithms, and wherein each machine learning algorithm may include at least one or more neural networks. In an exemplary embodiment, the one or more environment models 112c may be generated corresponding to the amount of time spent by each jig in each zone of the ED oven 114, the speed of each jig in each zone of the ED oven 114, the EMT of the automobile component at different jig positions in the ED oven 114, the power consumption, the fuel flow rate, the fuel consumption, the fan speed, the supply and return temperature, and the initial temperature of the automobile component.

At step 524, the environment models 112c are validated. In an embodiment, the application server 102 or the computing device 106 may be further configured to perform a check to validate the environment models 112c. Each environment model 112c may be validated based on at least the real test values and predicted values. If at step 524, the validation is successful, then step 526 is executed, else the control goes to step 522 again where preprocessing of the required or used or new data may be performed and then hyperparameter tuning may be further employed for retraining each environment model 112c.

At step 526, the RL agent 202 is trained. In an embodiment, the RL agent 202 may be configured to receive training using the environment models 112c. The RL agent 202 may learn the one or more control strategies through interaction with at least the one or more environment models 112c for generating the one or more policies. Each policy includes at least the optimal opening percentage of at least one gas damper and the optimal speed of at least one fan, based on processing of the real-time predictions by at least the one or more environment models.

At step 528, the RL agent 202 is validated. In an embodiment, the application server 102 may be further configured to perform a check to validate the RL agent 202. In some embodiment, the RL agent 202 may be validated over the digital twin 112. In some embodiment, the RL agent 202 may be validated over the environment models 112c. In some embodiment, the RL agent 202 may be validated by the post-processing module 304. The validation may include simulating the predicted outcomes (such as the damper openings and the fans speeds) and checking whether it reduces the energy and fuel consumption. If at step 528, the validation is successful, then step 530 is executed, else the control goes to step 526 again where retraining is executed. In some embodiments, preprocessing of the required or used or new data may be performed and then hyperparameter tuning may be employed for retraining the RL agent 202.

At step 530, the disclosed system is deployed with the ED oven 114. Based on the real-time predictions by the one or more environment models 112c, the RL agent 202 may output at least one policy including at least the optimal opening percentage of at least one gas damper and the optimal speed of at least one fan. Further, the at least one gas damper may be operated based on the corresponding optimal opening percentage that leads to optimization of fuel flow rate, and the at least one fan may be operated based on the corresponding optimal speed that leads to optimization of energy consumption. The fuel and energy consumption may be optimized while maintaining at least one or more of: the EMT of the automobile component in a recommended range, the burner outlet temperature of the one or more gas burners in a predefined range, the optimal time spent for each unit process, the energy consumption between minimum and maximum energy consumption levels, and the fuel flow rate between minimum and maximum fuel flow levels. Further, in an embodiment, the RL agent's (202) policies may be continuously updated based on interactions with at least one of the digital twins 112, the one or more environment models 112c, or the real-time operational data associated with the ED oven process. Further, the RL agent 202 may adapt to changing objectives, system requirements, and new data post-deployment, and adjust its policies based on a continuous feedback loop from real-time operational data of the ED oven process.

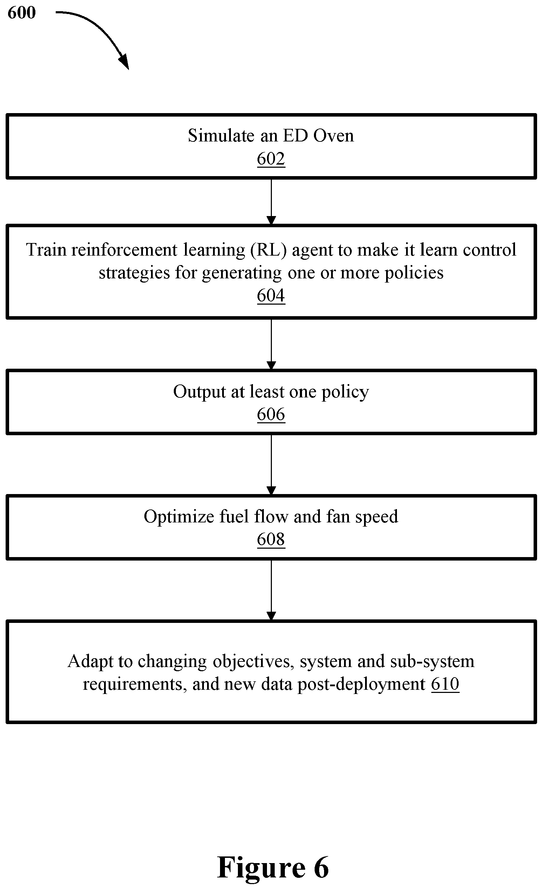

Figure 6 is a diagram that illustrates a flowchart 600 of a method for optimizing the fuel and energy consumption by the ED oven 114, in accordance with an embodiment of the present invention.

At step 602, the ED oven 114 is simulated. In an embodiment, the ED oven 114 may be simulated to form the digital twin 112 based on the collected operational data and the design data. The simulation of the ED oven 114 may include digital simulation of at least the one or more gas dampers, gas burners, VOC burners, recirculating fans, cooling fans, hot air fans, and fuel injectors associated with the ED oven 114.

At step 604, the RL agent 202 may be trained. In an embodiment, the RL agent 202 may receive training by using at least the environment models 112c derived from the digital twin 112 of the ED oven 114. The RL agent 202 may receive training to make it learn the one or more control strategies through interaction with at least the environment models 112c for generating the one or more policies. Each policy may include at least the opening percentage of the one or more gas dampers and the speed of the one or more fans. In an embodiment, the RL agent's (202) training may also involve defining the reward function based on at least one of the fuel supply rate, the fan power consumption, the fan speed, the EMT, the burner outlet temperature, and the time spent for each unit process. The RL agent 202 may learn by maximizing the received positive rewards for more desired outcomes and by minimizing the received negative rewards for less desired outcomes.

At step 606, the at least one policy is output. In an embodiment, the at least one policy including at least the optimal opening percentage of at least one gas damper and the optimal speed of at least one fan, based on processing of at least the real-time predictions by at least the one or more environment models 112c. The at least one gas damper may be operated based on the corresponding optimal opening percentage that leads to optimization of the fuel flow rate, and the at least one fan may be operated based on the corresponding optimal speed that leads to optimization of the energy consumption.

At step 608, the fuel flow and fan speed are optimized. In an embodiment, the RL agent 202 may optimize the fuel flow and fan speed, ensuring the one or more constraints are met by setting the one or more optimal values for one or more process parameters, thereby enabling savings in at least the energy and fuel consumption. The one or more constraints may include at least maintaining the EMT at different jig positions as per automobile components' requirement, maintaining the burner outlet temperature of the one or more gas burners in a predefined range, maintaining the optimal time spent for each unit process, maintaining the energy consumption between minimum and maximum energy consumption levels, and maintaining the fuel flow rate between minimum and maximum fuel flow levels.

At step 610, the RL agent 202 adapts to changing objectives, system and sub-system requirements, and new data post-deployment, and adjust its policies or generates new polices based on a continuous feedback loop from the real-time operational data of the ED oven process. Each policy may be validated over the digital twins 112 or the environment models 112c. The validation may include simulating the predicted outcomes over the digital twins 112 or the environment models 112c and checking whether it optimizes the fuel and energy consumption.

Figure 7 is a diagram 700 that illustrates the ED oven 114 and its equipment, in accordance with an embodiment of the present invention. The ED oven 114, used in the automobile paint shops, is a sophisticated piece of equipment designed for baking and curing the coated automobile component 716. The ED oven 114 is integral to achieving a high-quality, durable finish on the automobile parts. It operates through a series of controlled heating and cooling processes, ensuring the paint is properly cured. The oven's design includes various equipment, such as the gas dampers 702, the gas burners 704, the VOC burners 706, the fans 708, and the fuel injectors 710, each playing a specific role in the coating process. The oven's design further includes multiple zones 712, such as the pre-heat zone 712a, the heat-up zone 712b, the hold-up zone 712c, and the cooling zone 712d, each with a specific temperature and atmosphere to achieve the desired coating properties.

In an embodiment, the gas dampers 702 regulate the flow of fuel to the burners 704 or 706. In an embodiment, the gas burners 704 are used to heat the ED oven 114. The burners 704 must be precisely controlled to reach and maintain the required temperatures in various zones of the ED oven 114. In an embodiment, the VOC burners 706 are specialized equipment used to incinerate harmful VOCs released during the curing process, thus reducing environmental pollution. For example, the VOC burners 706 may be used to burn the particulate matter in the exhaust gas into smaller and non-toxic components before releasing them into the atmosphere. In an embodiment, the fans 708 includes the one or more recirculating fans, cooling fans, or hot air fans. The recirculating fans circulate air within the ED oven 114, ensuring uniform temperature distribution. The cooling fans may be used to bring the temperature of the coated components down to a safe level. The hot air fans may distribute hot air evenly throughout the ED oven 114, crucial in the heat-up zones. The fuel injectors 710 play a role in fuel delivery to the burners 704 or 706. Precision in fuel injection is key to achieving efficiency and maintaining the desired temperature.

In an embodiment, the pre-heat zone 712a gradually raises the temperature of the coated automobile component 716 to avoid thermal shock. It prepares the surface for efficient curing in the subsequent zones. Further, in the heat-up zone 712b, the temperature is further increased to levels necessary for curing the coating. Precise temperature control may be essential to prevent defects in the coating. Further, in the hold-up zone 712c, the coated automobile component 716 is held at the peak temperature to ensure thorough curing. The duration in this zone is critical for achieving optimal coating properties. Finally, in the cooling zone 712d, the coated automobile components 716 are gradually cooled to a safe handling temperature. Rapid cooling can cause thermal stresses, so this process must be controlled carefully. The ED oven 114 also includes a carrier including the one or more jigs 714. The carrier may be used to move the painted automobile components 716 through the oven by means of the one or more jigs 714. They are designed to withstand high temperatures and are made of materials that are resistant to corrosion.

The disclosed systems and methods for optimizing the ED oven process and operation in the automobile paint shop presents several significant advantages, making it a highly efficient and innovative solution in industrial coating processes. By optimizing the fan speeds, the damper positions, and the fuel flow rates, the system significantly reduces energy and fuel consumption. This not only leads to substantial cost savings but also contributes to a smaller environmental footprint, aligning with sustainability goals. Further, the system's ability to maintain optimal conditions, like the EMT and uniform zone temperatures, ensures high-quality and consistent coating results. This is crucial in the automotive industry, where coating quality directly impacts product durability and aesthetics. Further, with its RL agent 202, the system can adapt to changing operational conditions and requirements. This means it remains effective even as production demands, coating materials, or environmental conditions change, ensuring long-term applicability. Further, integration of the real-time operational data allows for immediate adjustments and decision-making. This leads to a more responsive and efficient operation, capable of quickly addressing any deviations from optimal conditions. Further, by continuously monitoring and analyzing the oven's performance, the system can predict maintenance needs, reducing unexpected downtimes and prolonging the equipment's lifespan. The system provides valuable insights into the oven's operation, enabling continuous improvement and fine-tuning of the coating process. This not only enhances efficiency but also drives innovation in process management. By optimizing the fuel and energy usage and maintaining controlled emissions, the system helps in complying with environmental regulations, which is increasingly important in industrial operations. Thus, the disclosed systems and methods provide a comprehensive solution that enhances the efficiency, quality, and sustainability of the coating process in the automobile paint shops. Its blend of advanced technologies like digital twins, machine learning, and real-time data analysis represents a significant step forward in industrial process optimization.

While the present systems and methods have been described with reference to exemplary embodiments, it should also be appreciated that numerous modifications and alternative embodiments may be devised by those having ordinary skill in the art without departing from the broader and intended spirit and scope of the present system as set forth in the claims that follow.

## Claims

1. A system (100) for optimizing fuel and energy consumption by an automobile paint shop Electro-Deposition (ED) oven (114), the system (100) comprising:
a digital twin (112) configured to simulate the ED oven (114) used for baking and curing a coated automobile component (716) in an automobile paint shop (108), wherein the ED oven (114) is simulated based on collected operational data and design data; and
a reinforcement learning (RL) agent (202) configured to:
receive training using one or more environment models (112c) derived from the digital twin (112) of the ED oven (114);
learn one or more control strategies through interaction with at least the one or more environment models (112c) for generating one or more policies, wherein each policy includes at least opening percentage of one or more gas dampers (702) and speed of one or more fans (708); and
output at least one policy including at least an optimal opening percentage of at least one gas damper (702) and an optimal speed of at least one fan (708), based on processing of at least real-time predictions by at least the one or more environment models (112c),
wherein the at least one gas damper (702) is operated based on the corresponding optimal opening percentage that leads to optimization of fuel flow rate, and the at least one fan (708) is operated based on the corresponding optimal speed that leads to optimization of energy consumption, and wherein the fuel and energy consumption are optimized while maintaining at least effective metal temperature (EMT) of the automobile component (716) in a recommended range in the ED oven (114).

2. The system (100) according to claim 1, wherein the operational data includes at least an amount of time spent by each jig (714) in each zone (712) including at least one of a pre-heat zone (712a), a heat-up zone (712b), a hold-up zone (712c), and a cooling zone (712d) of the ED oven (114), speed of each jig (714) in each zone (712) of the ED oven (114), EMT of the automobile component (716) at different jig positions in the ED oven (114), power consumption, fuel flow rate, fuel consumption, fan speed, supply and return temperature, and initial temperature of the automobile component (716).

3. The system (100) according to claim 1, wherein the design data includes at least specifications of one or more equipment associated with the ED oven (114), wherein the equipment corresponds to at least one or more gas dampers (702), gas burners (704), VOC burners (706), fans (708), and fuel injectors (710).

4. The system (100) according to claim 1, wherein the RL agent (202) is further configured to optimize the fuel flow rate and fan speed, ensuring one or more constraints are met by setting one or more optimal values for one or more process parameters, thereby enabling savings in at least the energy and fuel consumption.

5. The system (100) according to claim 4, wherein the one or more constraints include at least maintaining the EMT at different jig positions as per automobile components' requirement, maintaining burner outlet temperature of one or more gas burners (704) in a predefined range, maintaining optimal time spent for each unit process, maintaining energy consumption between minimum and maximum energy consumption levels, and maintaining fuel flow rate between minimum and maximum fuel flow levels.

6. The system (100) according to claim 1, further comprising: (1) a first principles physics-based model (112a) that is simulated based on the processed operational data and the design data and is then validated by: using real-time operational data or performing manual inspection, (2) a reduced order model (ROM) (112b) including at least design of experiments (DoE) data and outputs of the DoE data, wherein the ROM (112b) is generated based on the first principles physics-based model (112a) and simulation, and (3) the one or more environment models (112c) that are generated based on at least the DoE data and the outputs of the DoE data, and wherein the environment models (112c) are validated based on real test values and predicted values, and wherein preprocessing is performed and then hyperparameter tuning is employed for retraining the one or more environment models (112c) in cases where the validation does not meet predefined error thresholds.

7. The system (100) according to claim 6, wherein the digital twin (112) comprises at least one of: (1) the first principles physics-based model (112a), (2) the ROM (112b), and (3) the one or more environment models (112c).

8. The system (100) according to claim 1, wherein the RL agent's (202) training further involves defining a reward function based on at least one of fuel supply rate, fan power consumption, fan speed, EMT, burner outlet temperature, and time spent for each unit process, and wherein the RL agent (202) learns by maximizing the received positive rewards for more desired outcomes and by minimizing the received negative rewards for less desired outcomes.

9. The system (100) according to claim 1, wherein the RL agent's (202) policies are continuously updated based on interactions with at least the digital twin (112), the one or more environment models (112c), and real-time operational data associated with ED oven process.

10. The system (100) according to claim 12, wherein the RL agent (202) is further configured to adapt to changing objectives, system and sub-system requirements, and new data post-deployment, and adjust its policies or generates new polices based on a continuous feedback loop from the real-time operational data of the ED oven process, wherein each policy is validated over the digital twin (112) or the one or more environment models (112c), and wherein the validation includes simulating the predicted outcomes over the digital twin (112) or the one or more environment models (112c) and checking whether it optimizes the fuel and energy consumption.

11. The system (100) according to claim 1, wherein the one or more environment models (112c) are configured to receive and process real-time operational data and generate the real-time predictions with respect to at least the EMT of the automobile component (716) at one or more jig positions in each zone, fan speed, damper position, fan power consumption, fuel flow rate, zone temperature, return temperature from one or more zones, and supply temperature to the one or more zones.
